# EUROPEAN PATENT SPECIFICATION

(11) **EP 3 854 216 B1**
(45) Date of publication and mention of the grant of the patent: **20.08.2025**
(21) Application number: 21156499.2
(22) Date of filing: 06.09.2018
(51) Int. Cl.: A23D 9/05, A21D 2/16, A21D 13/42

(54) **METHOD FOR PREPARING A FLOUR TORTILLA**
VERFAHREN ZUR HERSTELLUNG EINER MEHLTORTILLA
PROCÉDÉ DE PRÉPARATION D'UNE TORTILLA DE FARINE

(30) Priority: 06.09.2017 US 201762554600 P; 12.10.2017 NL 2019710
(43) Date of publication of application: 28.07.2021
(62) Divisional of application: 18789235.1
(73) Proprietor: Mauri Technology B.V., 4878 AK Etten-Leur (NL)
(72) Inventor: KARREMANS, Adrianus Rutgerus Antonius, 4878 AK Etten-Leur (NL); VAN OORT, Martinus Gerardus, 4878 AK Etten-Leur (NL); CARREON, Oscar, 4878 AK Etten-Leur (NL); PRIMO MARTÍN, Cristina, 4878 AK Etten-Leur (NL)
(74) Representative: V.O.

(56) References cited:
- WO-A1-2009/041821
- WO-A1-2010/124206
- WO-A2-03/103404
- WO-A2-2016/010421
- US-A1- 2005 214 436
- US-A1- 2014 342 051

## Description

The invention relates to a method for preparing a flour tortilla (including whole wheat, multi grain), to a tortilla obtainable by such a method and to the use of a fatty substance to improve a property of a tortilla prepared using a fatty substance.

Flour tortillas are a unique baked product, made from cereal flour, usually maize or wheat.

Wheat flour tortillas are gluten structured, just like bread. Almost all tortillas are chemically leavened, baked quickly and cooled to ambient temperatures in less than 15 minutes.

Flour tortillas have soft, silky, smooth texture, are opaque and fluffy and have excellent pliability; are resistant to cracking and have small, evenly distributed blisters. Blisters create desirable characteristics in the final product, showing up as lightly browned spots on the surface.

Flour tortillas are becoming increasing popular, for instance as a substitute for bread, rolls and buns.

Flour tortillas can be made by making a dough from flour, fat and salt and water (E.g. E.J. Pyler, Baking Science 7 Technology, Third Edition, Vol II, published by Sosland Publishing Company, Merriam, Kansas, USA). Most large commercial tortilla manufacturers use the hot-press method of mixing, forming and baking to produce flour tortillas, e.g. as described in Bello, A.B.; Serna-Saldivar, S.O.; Waniska, R.D. and Rooney, L.W. Methods to prepare and evaluate wheat tortillas, Cereal Foods World (1991)
In this method, a smooth dough comprising flour, water, fat, salt, and usually one or more ingredients selected from baking powder, yeast, preservatives, gums, reducing agents and emulsifiers is mixed to an extensible, elastic, non-sticky and relatively firm dough.

By optimally mixing and adding proper water levels a silky, smooth-textured dough, with many layers in the final product is formed.

Dough temperature also affects consistency, with lower dough temperatures increasing water absorption. This leads to a softer final product. The temperature may for instance be in the range of 27-38 °C. The optimum temperature for flour-tortilla dough is usually 27° to 33.5°C.

After mixing, the flour tortilla dough is scaled to a desired weight, usually from about 30 to about 150 gram, *e*.*g*. about 40 to about 50 gram or about 45 to about 48 gram, depending on the desired diameter for the tortilla, is rounded into a ball and is then allowed to rest (relax, proof), usually for about 5-15 minutes. Proofing the dough helps the pressing process. Insufficient relaxation can result in a translucent finished product with less layering.

After resting, the dough pieces are placed under a hydraulic press that is heated. The pressing process forms a thin skin on the surface of the tortilla, limiting the escape of steam and carbon dioxide during baking. This causes the tortilla initially to form small blisters or gas pockets which deflate upon cooling.

Baking is usually done in a conveyer oven that flips the tortilla over during its journey through the oven. In particular, a specialized direct gas fired slatted belt may be used. Baking time (oven dwell time) may for instance be approximately 30 seconds in a 190° to 235°C oven. In a specific embodiment, the oven temperature is 190-200 °C. The tortillas are then cooled and packaged.

The over-all quality of flour tortillas, is determined by various properties. A low fat content is generally desired from a consumer perspective, as fat gives rise to a high calorific density. In particular a high saturated fat content is considered less desirable from a health perspective. However, in particular tortillas having a reduced fat content may be considered inferior to regular-fat tortillas (typically containing about 8 -12 wt. % fat, for instance 8-9 wt. % fat), but also for regular-fat tortillas it is desirable to improve one or more properties.

Relevant properties in particular include:
Folding: a low tendency to break on the seams upon folding the tortilla is desired.
Breaking: it is desired that the tortilla shows good resistance against tearing. *E.g*. low-fat tortillas tend to be torn apart at a lower tearing force than regular tortillas.
Rolling: a good tortilla should be easily rollable, e.g. around a known diameter dowel, rod or stick, without showing substantial cracking and/or breaking. This is especially a challenge upon aging of the tortillas. Thus, it would be desirable to provide a tortilla that has good rolling properties. In particular it is desired to provide a tortilla with good rolling properties for a prolonged period of time.
Springiness: Upon taking a low fat full tortilla in one hand and crumpling or wadding it firmly, it is desirable that the tortilla 'springs back' freely and unfolds completely without breaking.
Colour: a product with a substantially uniform (off-)white colour, wherein blisters are present is appreciated by many consumers. The blisters show up as lightly browned spots on the surface. In particular, low-fat tortillas have a less off-white, more pale and less uniform colour.
Layering/lamination: a layered structure of the tortilla is desired. In particular, low-fat tortillas tend to be less layered compared to regular tortillas.
Dryness: a tortilla should preferably have a not too dry mouthfeel Consumers recognize reduced fat and low fat tortillas as having a drier mouthfeel than traditional full fat tortillas.
Size: The size (diameter) of conventional reduced fat tortillas is significantly smaller than the size of regular-fat tortillas, of the same weight. Low-fat tortillas of a specific weight may for instance have a diameter that is less than 90 % of the diameter of a regular-fat tortilla of the same weight and apart from the fat having the same composition
Uniformity size/shape: Reduced fat tortillas tend to be less uniform in shape and size.
Stacking stickiness: It is desired that -when stacked and packaged - tortillas show no or a low tendency to stick to one another. In particular, upon aging the tendency to stick may increase. In particular, tortillas known in the art, made with vegetable oil instead of solid shortening tend to stick more to each other upon prolonged shelf life. Also tortillas, known in the art, made with enzymes, such as bacterial or fungal amylases, tend to stick more to each other, regardless of shelf life.
Stack height: As a consequence of smaller diameters, the height of a stack of, *e.g.,* 10 tortillas is generally higher for reduced fat tortillas than for regular fat tortillas; *i.e.* low fat tortillas are thicker than regular tortillas. This is unwanted due to negative effects on rollability, foldability and eating characteristics.
Opacity: Opacity is measured subjectively using a continuous scale. 100 % is completely opaque (white) and 0% is completely translucent (not white). Ideally, translucency is eliminated since opacity is a desired quality attribute.

Fat, in particular saturated fat (shortening) is conventionally used in a substantial amount to provide desirable properties, such as described above, especially for tortillas wherein at least a substantial part of the flour used for the dough is wheat flour. Flour tortillas made with liquid fat (vegetable oil comprising a high content of unsaturated fat) address the health concern with respect to a high saturated fat content, but may also show rather high stickiness or zippering, like low-fat tortillas. Also dough conditioners, such as added emulsifiers, like monoglycerides and/or diglycerides may needed (see e.g. Plyer page 1070, referring to 8 % shortening and 0.5 % dough conditioner, relative to the flour weight).

In WO 2009/041821 it is described how a relatively simple measure surprisingly allows the preparation of a flour tortilla with good properties, such as rollability, stack height, etc as described above, at a relatively low fat content without needing dough conditioners. This is accomplished by applying a relatively low amount of a fatty substance to the tortilla dough prior to shaping. Although, this method provides good results, the dosing of fatty substance to the surface of the dough may require additional measures in order to be employed at a large industrial scale at low cost.

It has now been found that good properties such as rollability, stack-height non-stickiness etc. are also feasible at a relatively low fat content, and without needing emulsifiers or other non-triglyceride dough conditions, by using a specific fat component as an ingredient for a dough from which the tortilla is prepared

Accordingly, the invention relates to a method for preparing a wheat flour tortilla according to claim 1..

Generally, at least 65 %, preferably at least 70%, in particular 75-100 % of the fatty acids are saturated fatty acids having 8-22 carbon atoms. Particularly good results have been achieved with a method according to the invention wherein the fat particles at least substantially consist of triglycerides of saturated fatty acids having 8-22 carbon atoms.

Further the invention related to a wheat flour tortilla dough according to claim 14.

Further the invention relates to a flour tortilla according to claim 16, in particular a wheat flour tortilla.

A flour tortilla obtained or obtainable in accordance with the invention in particular shows one or more improved properties with respect to folding characteristics, breaking characteristics, rolling characteristics, springiness, crust colour, layering/puffing, opacity, stacking stickiness and stack height compared to a tortilla made from a dough portion of the same dough (batch) wherein conventional shortening or an emulsifier, such as a mono- or diglyceride, is used.

The fat particles as defined in the present claims can be used in a method according to the invention to improve a property of a tortilla selected from the group of folding characteristics, breaking characteristics, rolling characteristics, springiness, crust colour, layering/puffing, opacity, stacking stickiness and stack height. In particular, good results have been achieved with respect to realizing an improvement on stickiness (reduced stickiness and reduced zippering), and improvement on rollability, foldability and strength. Further, addition of the fat particles has been found to have a positive effect on shape and diameter, in that in a mass production a higher percentage of the prepared tortillas meet the specs with respect to obtaining an essentially circular shape and the desired tortilla diameter.

Accordingly, the invention further relates to the use of fat particles to reduce flour tortilla stickiness or to reduce flour tortilla zippering according to claim 17. The fat particles can in particular be a fat powder.

It has further been found that in a flour tortilla (obtained) according to the invention shelf-life (stack sticking) may be improved.

Unless defined otherwise, all technical and scientific terms used herein have the same meaning as commonly understood by one of ordinary skill in the art. E.g., to the skilled person in the field of flour tortillas, it is clear that the term 'flour tortilla' relates to a type of soft thin flatbread made from cereal flour. The terms 'soft' , 'pliable' and 'rollable' are clear terms to distinguish flour tortillas in accordance with the invention from a different class of products that are also bear the name 'tortillas', such as tortilla chips, which have a crispy texture or the Spanish tortilla omelet. How well a flour tortilla performs on the rollability parameter can be assessing by wrapping the tortillas were wrapped around a dowel (1 cm diameter) by trained personal. This can also be (semi) quantitatively assessed by marking the extent to which cracking and breaking occurs using a scale from 1 (broken immediately, impossible to roll, i.e. no flour tortilla), via 3 (minor degree of cracking or breaking, allowing to consume it e.g. with a filling) to 5 (no cracks or breakage).

The term "or" as used herein means "and/or" unless specified otherwise.

The term "a" or "an" as used herein means "at least one" unless specified otherwise.

The term "essential(ly)" or "substantially" is generally used herein to indicate that it has the general character or function of that which is specified. When referring to a quantifiable feature, this term is generally used to indicate that it is more than 50 %, in particular more than 70 %, more in particular at least 90 %, more in particular at least 95 %, even more in particular at least 98 % of the maximum that feature. The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular 0 - 0.01 wt.%, more in particular 0 - 0.005 wt.%, based on total weight of the product in which it is present.

The term "about" in relation to a value generally includes a range around that value as will be understood by the skilled person. In particular, the range is from at least 10 % below to at least 10 % above the value, more specifically from 5 % below to 5 % above the value.

When referring to a "noun" (*e.g.* a compound, an additive *etc*.) in singular, the plural is meant to be included, unless specified otherwise.

For the purpose of clarity and a concise description features are described herein as part of the same or separate embodiments, however, it will be appreciated that the scope of the invention may include embodiments having combinations of all or some of the features described.

In principle, a method of the invention can be used to prepare any type of (soft, rollable) flour tortilla from a dough as defined in claim 1, in particular for the preparation of wheat flour tortillas. The tortilla may be selected from reduced fat flour tortilla's, low-fat flour tortilla's and full-fat flour tortilla's.

Full-fat tortillas usually have an ingredient-fat content of 5-20 wt.%, in particular of 6-20 wt. %, more in particular 8-20 wt. %, relative to flour weight.

The ingredient-fat content of the dough for a low - fat tortilla (as defined by the United States 21 CFR 101.62, 101.13 (l) (m)) may in particular be less than 5 wt. % on flour weight or less than 3 g per serving of a 55 g tortilla. Preferably, the fat content is about 3 wt. % or less. More preferably the fat content is 2.5 wt. % or less. In a specific embodiment, the fat content is 2.0 wt. % or less.

The dough may be prepared in a manner known per se, with the proviso that the fat particles are added as well.

At least wheat flour is used for preparing the dough. Another cereal flour, in particular maize flour may be used in combination with wheat flour. Preferably, 75-100 wt.% of the flour is wheat flour, more preferably 90-100 wt.% of the flour is wheat flour. If another flour is combined with wheat flour, preferably maize flour is used. Particularly good results have been achieved with a method wherein the flour component for the tortilla dough consists of wheat flour.

Wheat flour usually comprises gluten and other protein(s) naturally present in the flour. Optionally gluten and/or other protein is added. Usually the protein content (including gluten) is at least about 7.5 wt. %. Usually the protein content (including gluten) is about 14 wt. % or less. Preferably the flour has a protein content of at least 9.5 wt.%, in particular a protein content of 9.5-11.5 wt. % (all relative to flour weight). With conventionally prepared tortillas problems have been encountered with flour containing less protein or gluten yield tortillas that crack easily and split after overnight storage. Flours with more than 11.5 wt.% gluten, however, produce doughs that take longer to mix and that require longer resting periods before pressing and baking. It is contemplated that in a method according to the invention, these drawbacks may be alleviated at least to some extent.

In accordance with the invention, it is generally not needed to add emulsifiers. If desired, an emulsifier can be present in the dough, for instance sodium-stearoyl-lactate (SSL). An emulsifier can be used to condition the dough, making it easier to handle and improving the finished texture. Mono- and diglycerides (e.g. distilled) can help to (further) reduce shortening levels, in order to achieve a similar shortening effect. These can be used to improve tearing quality and help prevent tortillas from sticking to each other in the package. A monoglyceride may be used to provide anti-staling qualities and improve shelf life.

However, particularly good results have been used without adding emulsifiers. Accordingly, these are generally not added to (provide) the dough. Accordingly, a flour tortilla according to the invention is generally essentially free of emulsifiers. If used, emulsifiers are generally used in a relatively low amount, typically of less than 0.5 wt. %, preferably of less than 0.3 wt. %, in particular of 0.2 wt.% or less, more in particular 0.1 wt.% or less, relative to the flour content.

A leavening agent can be present, providing puffing during the baking process, yielding a tender tortilla. Baking powder and leavening acids such as monocalcium phosphate (MCP), sodium aluminium phosphate (SALP) and sodium aluminium sulphate (SAS), sodium acid pyrophosphate (SAPP) may be used .Yeast may be used to provide the typical yeasty aroma and taste, as well as for leavening.

One or more enzymes belonging to the group of amylases, xylanases, proteases, lipases and oxidases, can be added. The enzymes may contribute to one or more desirable effects. Amylases have a positive effect on rollability and foldability, proteases have a positive effect on diameter and stack height. Xylanases and lipases have a positive effect on dough characteristics and on whiteness of the tortillas. In conventional tortillas, enzymes can have a negative effect on tortilla stickiness when used in suboptimal dosages or in suboptimal combinations. The present invention is also useful to improve (reduce) tortilla stickiness, as a result of an adverse affect of an enzyme or combination of enzymes.

A gum such as guar, carboxymethylcellulose, xanthan or gum arabic can be used to improve machinability, decrease dough stickiness, delay staling, improve rolling and folding properties, bind water, improve freeze/thaw stability and decrease moisture loss. It is advised to add gum (usually 0.1-0.5 wt.%, if present) during dry-blending to assure a homogeneous mix.

Starch can also add functionality to tortilla dough. Co-blending unmodified pregelatinized starches, such as potato starch, waxy starch, high amylose starch (usually 5-15 % based on flour weight, if present) with monoglyceride can improve machinability of a tortilla dough, thus improving production capacity.

A reducing agent can be used to improve dough quality and reduce resting time. L-cysteine, sodium bisulphite or sodium metabisulphite (usually 10-40 ppm, if present) may be used improve machinability and decrease elasticity. However, such agents are entirely optional.

An oxidizing agent such as ascorbic acid, azodicarbonamide or calcium peroxide may be used to improve mixing tolerance and dough machinability.

Milk solids can be added, such as non-fat dry milk. Such ingredient can improve crumb colour, flavour or dough handling. A concentration of about 0.75 wt.% milk solids is recommended.

A preservative can be added (usually 0.1-0.75 wt.%, if present), to inhibit mould growth after packaging. Sodium and calcium propionate, organic propionates, potassium sorbates, sorbic acid are in particular suitable as tortilla preservatives.

If desired, a pH-regulator, typically an acid such as fumaric, adipic, citric, is added to control the final pH of the tortilla, which is preferably 5.5 to 6.5 at 25 °C). pH can be determined by measuring the pH directly in the dough using a pH electrode. Alternatively, the pH in the final product can be determined by homogenizing a tortilla piece with fixed weight in water and measuring the pH using a glass electrode coupled with a pH meter. A pH below this range may result in a lighter colour, while a pH above the range may result in a darker colour, a bitter taste, more browning, a soapy mouthfeel or a limited mould free shelf life.

The fat particles at least substantially consisting of triglycerides of fatty acids having 8-22 carbon atoms, usually have a triglyceride content of 95-100 wt.%. A minor amount of one or more other components (acceptable for use in a food application may be present). A trace of other acylglycerides (monoglyceride, diglyceride) and/or free fatty acid may be present.

The fatty content as used herein as is usual in the art. It thus refers to the fatty acid content (of a specific fatty acid or total fatty acid), based on total moles of fatty acid, including fatty acid in bound form (such as in triglycerides, and - if present - other acylglycerides) and - if present - as free fatty acid. This can be determined by GC in a manner generally known per se.

Stearic acid is generally a major component of the fatty acid composition of the fat particles, generally providing at least about 40 % of the fatty acid composition. Typically, especially for the fat particles at least substantially consisting of triglycerides of saturated fatty acids having 8-22 carbon atoms, at least 75 % of, of the fat particles is stearic acid, preferably 75-98 %, more preferably 80-97 %, in particular 86-96 %.

In particular for an embodiment wherein the fat particles at least substantially consist of triglycerides of saturated fatty acids having 8-22 carbon atoms , generally, 0-3 wt.%, preferably 0.1-1 %, in particular about 0.5 % is of the fatty acid content is myristic acid (C14)

Generally 0-12 %, preferably 1-10 %, more preferably 4-8 % of the fatty acid content is palmitic acid (C16).

In particular for an embodiment, wherein the fat particles at least substantially consist of triglycerides of saturated fatty acids having 8-22 carbon atoms, generally 0-9 %, preferably 0.6-6 %, more preferably 1-4 %, in particular about 2 % of the fatty acid content is arachinic acid (C20).

In particular for an embodiment, wherein the fat particles at least substantially consist of triglycerides of saturated fatty acids having 8-22 carbon atom, generally 0-6%, preferably 0.4-5 %, more preferably 1-3 %, in particular about 2 % of the fatty acid content is behenic acid (C22).

For an embodiment, wherein the fat particles at least substantially consist of triglycerides of saturated fatty acids having 8-22 carbon atoms, C8-C12 fatty acids generally form 0-10 %, in particular 0.1-5% of the total fatty acid content, more in particular 0.1-2% of the total fatty acid content.

Other fatty acids than C8-C22 saturated fatty acids generally form 0-5 %; in particular less than 3 % of the total fatty acid content, more in particular less than 2 % of the total fatty acid content.

In an embodiment, wherein the fat particles at least substantially consist of triglycerides of saturated fatty acids having 8-22 carbon atoms, unsaturated fatty acid content generally is 0-5 %, preferably less than 2 %, in particular less than 1 % of the total fatty acid content.

Free fatty acid content is generally 0-3 %, typically 0-2%, in particular 0-1%, preferably less than 0.5 wt.%.

Transfatty acid content is generally 0-3 %, and typically less than 2%.

In particular good results have been achieved in an embodiment wherein the fat particles at least substantially consist of essentially fully hydrogenated canola oil (rapeseed oil). If desired, the fat particles can be a blend of (fully) hydrogenated canola oil and another (fully) hydrogenated vegetable oil.

Preferably, the fat particles have been obtained by spray-cooling. It was found that with such particles better improvements where obtained than with fat particles having about the same fat composition, obtained in another manner, such as by spray drying.

Advantageously, the number or weight average size of the fat particles is in the range of about 200 to about 400 µm. In a particularly preferred embodiment, the number or weight average size of the fat particles is in the range of about 250 to about 300 µm.

The particle size distribution usually meets at least one, preferably at least 2, more preferably each of the following criteria:
- at least 10 wt.% of the fat particles has a size <136 µm
- at least 25 wt. % of the fat particles has a size <199 µm
- at least 50 wt.% of the fat particles has a size <350 µm
- about 100 wt.% of the fat particle has a size <439 µm.

Usually, the number average particle size or the weight average particle size of the fat in a method according to the invention is 300 µm or less. In an embodiment, the average particle size is in the range of 250 to 300 µm. However, also good results have been achieved with a fat having an average particle size of about 220/230 or less. Usually the average particle size is about 10 µm or more, in particular 50 µm or more.

The fat particles usually have a melting point, as determinable by DSC, in the range of about 50 to about 80 °C, preferably in the range of about 60 to about 75 °C, more preferably in the range of about 65 to about 70 °C. A melting point of more than 60 °C, in particular a melting point of at least 65 °C has been found particularly advantageous to obtain a In a preferred embodiment, the fat particles have a saturated triglyceride content in the range of 90-100 wt.%; more preferably 95-100 wt.%, most preferably 98-100 wt.%. Such fat particles have been particularly found useful for obtaining tortillas, which can be provided in a stack (e.g. of 5-10 tortillas) with low zippering tendency, a high ease of separation, and without unacceptable deterioration when the tortillas are taken from a stack of tortillas..

The acid number of the fat particles usually is less than 3 mg KOH/kg, preferably less than about 1 mg KOH/kg.

The peroxide number is generally less than 6 meqO₂/kg, preferably less than 3 meqO₂/kg.

In a preferred embodiment, the fat particles have a saturated triglyceride content in the range of 90-100 wt.%; more preferably 95-100 wt.%, most preferably 98-100 wt.%. Such fat particles have been particularly found useful for obtaining a tortillas, which can be provided in a stack (e.g. of 5-10 tortillas) with low zippering tendency, a high ease of separation, and without unacceptable deterioration when the tortillas are taken from a stack of tortillas. In particular, good results have been achieved with tortillas having such a high saturated fatty acid content, a trans fatty acid content of 0-2 wt.%, an acid number of less than 1 mg KOH/kg, a free fatty acid content 0- 0.5 % and/or a peroxide number of less than 3 meqO₂/kg.

In an alternative embodiment, which has provided satisfactory results, the fat particles have a saturated triglyceride content of less than 90 %. For instance, acceptable results have been achieved with a blend of shea oil and coconut oil, comprising about 25 to about 35 % unsaturated fatty acids. On the basis of these results and the composition of said blend, it has been concluded that also acceptable results are obtainable with fat particles
wherein the fatty acid composition of the fat particles is:
- 8-16 %, preferably 10-14 %, lauric acid (C12)
- 1-10 %, preferably 3-8 %, palmitic acid (C16)
- 40-50 %, preferably 40-45%, stearic acid (C18)
- 22-32 % , preferably 24-30 % oleic acid (C18)
- 0.5-7 %, preferably 1-5 %, linoleic acid (C18)
- others 0-5 %;
For this embodiment, the melting point, as determinable by DSC, is relatively low, compared to the particles described herein above, typically in the range of about 44 to about 48 °C. Typically, the fat particles of this embodiment have a saturated fatty acid content of about 65 to about 75%, a trans fatty acid content of 0-2 wt.%, an acid number of less than 6 mg KOH/kg, a free fatty acid content 0- 3 % and/or a peroxide number of less than 3 meqO2/kg. Further specific features of this alternative may be based on the description above, mutatis mutandis.

The dough can be made in a manner known per se, with the proviso that said fat particles are included. The fat particles may substitute conventional ingredient fat or part thereof.

The fat particles are generally added in an amount of less than 5 wt.% based on total dough, preferably in an amount of 0.1-3 wt. %, more preferably in an amount of 0.5-2 wt.% based on the total weight of dough ingredients.

As a further fat ingredient a liquid vegetable oil (liquid at 25 °C) is included. Preferably the preparation of the dough comprises mixing the flour, the fat particles, water and further 2-15 wt.%, in particular 5-10 wt.% of a liquid vegetable oil, based on total dough ingredients.

It is surprising that with the inclusion of a substantial amount of vegetable oil such good results are achieved with respect to a low sticking together of tortillas stapled on each other. In conventional tortillas made with vegetable oils this is a problem, especially on aging of the tortillas.

The shaping of the tortilla dough is usually done after having the dough allowed to rest. Shaping is preferably done by pressing the dough portions under a hydraulic press. The press is preferably heated to between 175° and 235°C. The skilled person will know to determine a suitable pressure. The press usually exerts 750 - 1,450 psi (5.2-10 Mpa) of pressure over the plates. Preferably the pressure is 200-3000 psi, more preferably 500-2000 psi, most preferably 750-1450 psi. flattening the ball of dough into the distinctive round, flat tortilla shape. Pressing time (press dwell time) usually is between 0.9 and 1.5 seconds, preferably the pressing time is at least 1.1 sec. Preferably the pressing time is 1.4 sec or less.

After shaping, the tortilla is baked or heated in another manner to obtained a ready-to-consume manner. Heating can be done in a manner known per se, e.g. as described above or in the cited art..

As indicated above, the invention further relates to a flour tortilla obtainable in accordance with the invention.

Fat contents may be chosen in a wide range, as indicated above. Usually, the tortilla has an added fat content of 20 wt. % or less. In particular, the added fat content may be 15 wt. % or less, 10wt. % or less, 9 wt. % or less, or 8 wt.% or less, relative to flour weight. In a specific embodiment, the fat content is 5 wt.% or less, relative to flour weight.

Usually the fat content of the tortilla is at least 0.5 wt.%, in particular at least 2 wt.%, more in particular at least about 5 wt.%...

Advantageously the total fat content of a flour tortilla according to the invention is in the range of 0.1-15 wt. %, in particular in the range of 0.5-10 wt.%, more in particular 1-9 wt.%, relative to flour weight.

The invention will now be illustrated by the following example.

### Example 1:

Flour tortillas were made using the same, conventional, preparation method according to the recipe from Table 1. Different types of fat particles were used in the recipe of the flour tortillas and compared with control tortillas without said fat particles.

Flour Tortillas were prepared using a procedure, known in the art, as described below.

**Table 1; Recipe of flour tortillas**

| **Ingredients** | **Invention [g]** | **Control [g]** | **Control** + **emulsifier [g]** |
|---|---|---|---|
| Flour | 1000 | 1000 | 1000 |
| Water | 545 | 545 | 545 |
| Oil | 70 | 70 | 70 |
| NaCl | 15 | 15 | 15 |
| Baking powder | 24.6 | 24.6 | 24.6 |
| Emulsifier | 0 | 0 | 10 |
| Fat particles | 10 | 0 | 0 |
| Preservatives | 8 | 8 | 8 |

The fat particles were obtained from Friesland Food Kievit Bv (Palm Fat 1), Arthur Branwell & Co Ltd (Palm Fat 2&3) and Juchem Gruppe (spray-cooled Canola Fat) and exhibited the specifications according to Table 2.

**Table 2; Specifications of different fat types**

| **Fat type** | **Saturated fatty acids (%)** | **Melting point (°C)** | **Peroxide value (meqO2/kg)** |
|---|---|---|---|
| Palm Fat 1 | 55 | n.d. | n.d. |
| Palm Fat 2 | 88 | 55-60 | <4 |
| Palm Fat 3 | 69 | 55-60 | <4 |
| Canola Fat | 99* | 65-70 | <3 |

| | | | |
|---|---|---|---|
| * Comprising Myristic acid C14 (0.5%), Palmitic acid C16 (4-8%), Stearic acid C18 (86-96%), Arachinic acid C20 (3%) and Behenic acid C22 (2%) | | | |

### Processing

| | |
|---|---|
| **Mixing** | 2 min. slow 3.45 min. high speed with a McDuffy mixer. Dough temperature: 27-30 °C |
| **Dough weight** | : 1600 g. |
| **Resting time** | : 2 min. |
| **Dividing/shaping** | : Automatic dividing/round up in 30 dough pieces of 50 g each with a W&P Rotomat GS50 |
| **Resting time** | : 5 min. at room temp. on clothed plate. |

### Lawrence Equipment semi automatic tortilla machine.

| | |
|---|---|
| **Dwell time:** | 1,2 sec |
| **Dwell temp.:** | 204° C and 213° C bottom/top |
| **Baking temp.:** | between : 204° C and 213° C , two top burners on |
| **Baking time:** | ca 30 sec. |
| **Cooling:** | ca. half an hour. |
| **Wrap:** | 10 pieces in a bag. |

The obtained tortillas were evaluated every month for 6 months (by a panel of trained staff) for their zippering (excessive adhesion), 'ease of separation' (from 1 to 10), defined as easiness to separate two tortillas from a stack of multiple tortillas on a scale from one to ten, and 'No of usable tortillas', defined as the number of tortillas (from a total of 10) that could still be used after the separation of the tortillas. The averages for ease of separation and the number of useable tortilla along with whether the tortilla exhibited zippering or not are shown in Table 3.

It was found that tortillas containing canola fat showed improved properties regarding all three points mentioned before, compared to tortillas containing other fat particles, no fat particles or containing an emulsifier.

**Table 3; Test results of tortillas containing different fat type particles compared to the control groups.**

| **Ingredient** | **Zippering** | **Ease of separation** | **No. usable tortillas (of 10)** |
|---|---|---|---|
| Control | Y | 5 | 8 |
| Emulsifier* (1%) | Y | 8 | 9 |
| Palm Fat 1 (1%) | Y | 7 | 8 |
| Palm Fat 2 (1%) | Y | 7 | 8 |
| Palm Fat 3 (1%) | Y | 8 | 8 |
| Canola Fat (1%) | +/- | 10 | 10 |

| | | | |
|---|---|---|---|
| *50/50 blend mono/diglyceride +/- = improved, reduced zippering | | | |

More specifically, the following conclusions were drawn from the experiments:
Tortillas containing palm fat could be more easily separated from one another than the control group tortillas.

When canola fat was used instead of palm fat or emulsifier, both 'ease of separation' and 'No of usable tortillas' were significantly improved.

Moreover, tortillas that were prepared containing canola fat exhibited less zippering than tortillas in which other type of fat particles, no fat particles but with emulsifier or no fat particles or emulsifier were used.

### Example 2:

In a further example, flour tortillas were made using the same recipe and process as described in example 1, but using a fat with the following specification in Table 4

**Table 4: Fat 4 specification**

| **Fat type** | **Saturated fat (%)** | **Melting point (°C)** | **Peroxide value (meqO2/kg)** |
|---|---|---|---|
| Fat 4* | 70 | 44-48 | <3 |

| | | | |
|---|---|---|---|
| * Fat type 4 supplied by Juchem Gruppe (Sheaoil & Coconut oil) | | | |

Comprising Lauric acid C12 (10-14 %), Palmitic acid C16 (3-8%), Stearic acid C18 (40-46%), Oleic acid C18:1 (24-30%), Linoleic acid C18:2 (1-5%)
The tortillas were evaluated as per Example 1 and the results are shown in Table 5

**Table 5: Results for Fat 4**

| **Ingredient** | **Zippering** | **Ease of separation** | **No. usable tortillas (of 10)** |
|---|---|---|---|
| Control | Y | 5 | 8 |
| Fat 4 | +/- | 9 | 9 |

| | | | |
|---|---|---|---|
| +/- = improved, reduced zippering | | | |

### Example 3:

Flour tortillas were made using the same recipe and process as described in Example 1, and properties of flour tortillas made with canola fat particles (as in Example 1, average particle size 220-230 µm) were compared with flour tortillas made with a fraction of the canola fat particles (the fraction with a diameter of 50 to 100 µm). Results are shown in Table 6.

**Table 6: Results**

| | Zippering | Ease of separation | Number of useable tortilla |
|---|---|---|---|
| Canola fat | +/- | 10 | 10 |
| Canola fat fraction | +/- | 10 | 10 |

## Claims

1. Method for preparing a flour tortilla, comprising
- preparing a tortilla dough comprising mixing cereal flour, wherein the cereal flour is wheat flour or a combination of wheat flour and at least one other flour, water, a liquid vegetable oil and fat particles, which fat particles at least substantially consist of triglycerides of fatty acids having 8-22 carbon atoms;
- shaping the tortilla dough into a tortilla shape; and
- heating the shaped tortilla dough, thereby obtaining the flour tortilla.

2. Method according to claim 1, wherein the fat particles at least substantially consist of triglycerides of saturated fatty acids having 8-22 carbon atoms.

3. Method according to any of the preceding claims, wherein the fat particles have a trans fatty acid content of 0-2 wt.%, an acid number of less than 1 mg KOH/kg, a free fatty acid content 0- 0.5 % and/or a peroxide number of less than 3 meqO₂/kg.

4. Method according to any of the preceding claims, wherein the fat particles are fat particles obtained by spray-cooling.

5. Method according to any of the preceding claims, wherein the fat particles have a particle size distribution which particle size distribution is as follows
- at least 10 wt.% of the fat particles has a size <136 µm
- at least 25 wt. % of the fat particles has a size <199 µm
- at least 50 wt.% of the fat particles has a size <350 µm
- 100 wt.% of the fat particle has a size <439 µm.

6. Method according to any of the preceding claims, wherein the number average particle size or the weight average particle size is 300 µm or less.

7. Method according to any of the preceding claims, wherein the cereal flour comprises 75-100 wt.% wheat flour, based on total flour.

8. Method according to claim 7, wherein the cereal flour is wheat flour or a combination of wheat flour and maize flour, comprising at least 75 wt.% wheat flour, based on total flour.

9. Method according to claim 7, wherein the flour component for the tortilla dough consists of wheat flour

10. Method according to any of the preceding claims, wherein the fat particles are added in an amount of 0.1-3 wt. %, based on the total weight of dough ingredients.

11. Method according to any of the preceding claims, wherein the dough is prepared without adding emulsifiers.

12. Method according to any of the preceding claims wherein the dough that is prepared is essentially free from monoglycerides and diglycerides other than mono- and diglycerides that are naturally present in wheat flour.

13. Method according to any of the preceding claims, wherein the fat particles have a melting point, as determinable by DSC, in the range of about 50 to about 80 ° C.

14. Wheat flour tortilla dough, comprising fat particles dispersed therein, which fat particles are as defined in any of the claims 1-6, 10 and 13, the wheat flour tortilla dough further including a liquid vegetable oil.

15. Wheat flour tortilla dough according to claim 14 which is essentially free of added (i.e. other than naturally present in the flour) anticaking agents and added (i.e. other than naturally present in the flour) antioxidants.

16. Flour tortilla, wherein the flour tortilla is a wheat flour tortilla comprising a baked flour dough comprising fat particles dispersed therein, which fat particles are as defined in any of the claims 1-6, 10 and 13, or wherein the flour tortilla is a flour tortilla obtainable by a method according to any of the claims 1-13.

17. Use of fat particles as defined in any of the claims 1-6, 10 and 13 to reduce flour tortilla stickiness or to reduce flour tortilla zippering of a flour tortilla, wherein the flour tortilla is made by
preparing a tortilla dough comprising mixing cereal flour, wherein the cereal flour is wheat flour or a combination of wheat flour and at least one other flour, water, a liquid vegetable oil and the fat particles; shaping the tortilla dough into a tortilla shape; and
heating the shaped tortilla dough, thereby obtaining the flour tortilla.

## Patentansprüche

1. Verfahren zur Zubereitung einer Mehltortilla, umfassend:
- Zubereiten eines Tortillateigs, umfassend Mischen von Getreidemehl, wobei das Getreidemehl Weizenmehl oder eine Kombination aus Weizenmehl und mindestens einem anderen Mehl ist, Wasser, ein flüssiges Pflanzenöl und Fettpartikel, wobei die Fettpartikel mindestens im Wesentlichen aus Triglyceriden von Fettsäuren bestehen mit 8-22 Kohlenstoffatomen;
- Formen des Tortillateigs zu einer Tortillaform; und
- Erhitzen des geformten Tortillateigs, wodurch die Mehltortilla erhalten wird.

2. Verfahren nach Anspruch 1, wobei die Fettpartikel mindestens im Wesentlichen aus Triglyceriden gesättigter Fettsäuren bestehen mit 8-22 Kohlenstoffatomen.

3. Verfahren nach einem der vorhergehenden Ansprüche, wobei die Fettpartikel einen trans-Fettsäuregehalt von 0-2 Gew.-%, eine Säurezahl von weniger als 1 mg KOH/kg, einen freien Fettsäuregehalt von 0-0,5 % und/oder eine Peroxidzahl von weniger als 3 meqO₂/kg haben.

4. Verfahren nach einem der vorhergehenden Ansprüche, wobei die Fettpartikel Fettpartikel sind, erhältlich durch Sprühkühlung.

5. Verfahren nach einem der vorhergehenden Ansprüche, wobei die Fettpartikel eine Partikelgrößenverteilung haben, die wie folgt ist:
- mindestens 10 Gew.-% der Fettpartikel haben eine Größe <136 µm,
- mindestens 25 Gew.-% der Fettpartikel haben eine Größe <199 µm,
- mindestens 50 Gew.-% der Fettpartikel haben eine Größe <350 µm,
- 100 Gew.-% der Fettpartikel haben eine Größe <439 µm.

6. Verfahren nach einem der vorhergehenden Ansprüche, wobei die zahlenmittlere Partikelgröße oder die gewichtsmittlere Partikelgröße 300 µm oder weniger ist.

7. Verfahren nach einem der vorhergehenden Ansprüche, wobei das Getreidemehl 75-100 Gew.-% Weizenmehl umfasst, bezogen auf das gesamte Mehl.

8. Verfahren nach Anspruch 7, wobei das Getreidemehl Weizenmehl oder eine Kombination aus Weizenmehl und Maismehl ist, umfassend mindestens 75 Gew.-% Weizenmehl, bezogen auf das gesamte Mehl.

9. Verfahren nach Anspruch 7, wobei die Mehlkomponente für den Tortillateig aus Weizenmehl besteht.

10. Verfahren nach einem der vorhergehenden Ansprüche, wobei die Fettpartikel in einer Menge von 0,1-3 Gew.-% zugegeben werden, bezogen auf das Gesamtgewicht der Teigzutaten.

11. Verfahren nach einem der vorhergehenden Ansprüche, wobei der Teig ohne das Zugeben von Emulgatoren zubereitet wird.

12. Verfahren nach einem der vorhergehenden Ansprüche, wobei der zubereitete Teig im Wesentlichen frei von Monoglyceriden und Diglyceriden ist, anders als Mono- und Diglyceriden, die von Natur aus im Weizenmehl vorhanden sind.

13. Verfahren nach einem der vorhergehenden Ansprüche, wobei die Fettpartikel einen Schmelzpunkt, wie durch DSC bestimmbar, im Bereich von etwa 50 bis etwa 80 °C haben.

14. Weizenmehl-Tortillateig, umfassend darin dispergierte Fettpartikel, wobei die Fettpartikel nach einem der Ansprüche 1 bis 6, 10 und 13 definiert sind, wobei der Weizenmehl-Tortillateig ferner ein flüssiges Pflanzenöl beinhaltet.

15. Weizenmehl-Tortillateig nach Anspruch 14, der im Wesentlichen frei von zugegebenen (d. h. anderen als von Natur aus im Mehl vorhandenen) Antiklumpmitteln und zugegebenen (d. h. anderen als von Natur aus im Mehl vorhandenen) Antioxidationsmitteln ist.

16. Mehltortilla, wobei die Mehltortilla eine Weizenmehl-Tortilla ist, umfassend einen gebackenen Mehlteig, umfassend darin dispergierte Fettpartikel, wobei die Fettpartikel wie in einem der Ansprüche 1 bis 6, 10 und 13 definiert sind, oder wobei die Mehltortilla eine Mehltortilla ist, erhältlich durch ein Verfahren nach einem der Ansprüche 1 bis 13.

17. Verwendung von Fettpartikeln wie in einem der Ansprüche 1 bis 6, 10 und 13 definiert, um die Klebrigkeit der Mehltortilla zu reduzieren oder um das Tortilla-Haftungsverhalten der Mehltortilla zu reduzieren, wobei die Mehltortilla durch Zubereitung eines Tortillateigs hergestellt wird, umfassend das Mischen von Getreidemehl, wobei das Getreidemehl Weizenmehl oder eine Kombination aus Weizenmehl und mindestens einem anderen Mehl ist, Wasser, ein flüssiges Pflanzenöl und die Fettpartikel; Formen des Tortillateigs zu einer Tortillaform; und Erhitzen des geformten Tortillateigs, wodurch die Mehltortilla erhalten wird.

## Revendications

1. Procédé de préparation d'une tortilla de farine, comprenant :
- la préparation d'une pâte à tortilla comprenant le mélange de farine de céréales, la farine de céréales étant de la farine de blé ou une combinaison de farine de blé et d'au moins une autre farine, de l'eau, une huile végétale liquide et des particules de matières grasses,
dont les particules de matières grasses sont au moins sensiblement constituées de triglycérides d'acides gras ayant 8-22 atomes de carbone ;
- le façonnage de la pâte à tortilla en une forme de tortilla ; et
- le chauffage de la pâte à tortilla façonnée, obtenant ainsi la tortilla de farine.

2. Procédé selon la revendication 1, dans lequel les particules de matière grasse sont au moins sensiblement constituées de triglycérides d'acides gras saturés ayant 8-22 atomes de carbone.

3. Procédé selon l'une quelconque des revendications précédentes, dans lequel les particules de matière grasse ont une teneur en acides gras trans de 0-2 % en poids, un indice d'acide inférieur à 1 mg de KOH/kg, une teneur en acides gras libres de 0-0,5 % et/ou un indice de peroxyde inférieur à 3 meqO₂/kg.

4. Procédé selon l'une quelconque des revendications précédentes, dans lequel les particules de matière grasse sont des particules de matière grasse obtenues par refroidissement par pulvérisation.

5. Procédé selon l'une quelconque des revendications précédentes, dans lequel les particules de matière grasse ont une distribution de taille de particules qui est la suivante
- au moins 10 % en poids des particules de matière grasse ont une taille < 136 µm
- au moins 25 % en poids des particules de matière grasse ont une taille < 199 µm
- au moins 50 % en poids des particules de matière grasse ont une taille < 350 µm
- 100 % en poids des particules de matière grasse ont une taille < 439 µm.

6. Procédé selon l'une quelconque des revendications précédentes, dans lequel la taille moyenne des particules en nombre ou la taille moyenne des particules en poids est de 300 µm ou moins.

7. Procédé selon l'une quelconque des revendications précédentes, dans lequel la farine de céréales comprend 75-100 % en poids de farine de blé, sur la base de la farine totale.

8. Procédé selon la revendication 7, dans lequel la farine de céréale est de la farine de blé ou une combinaison de farine de blé et de farine de maïs, comprenant au moins 75 % en poids de farine de blé, sur la base de la farine totale.

9. Procédé selon la revendication 7, dans lequel le composant de farine pour la pâte à tortilla est constitué de farine de blé.

10. Procédé selon l'une quelconque des revendications précédentes, dans lequel les particules de matière grasse sont ajoutées en une quantité de 0,1 à 3 % en poids, sur la base du poids total des ingrédients de la pâte.

11. Procédé selon l'une quelconque des revendications précédentes, dans lequel la pâte est préparée sans ajout d'émulsifiants.

12. Procédé selon l'une quelconque des revendications précédentes, dans lequel la pâte qui est préparée est essentiellement exempte de monoglycérides et de diglycérides autres que les mono- et diglycérides qui sont naturellement présents dans la farine de blé.

13. Procédé selon l'une quelconque des revendications précédentes, dans lequel les particules de gras ont un point de fusion, tel que déterminable par DSC, dans la fourchette d'environ 50 à environ 80 °C.

14. Pâte de tortilla à la farine de blé, comprenant des particules de gras dispersées dans celle-ci, lesquelles particules de gras sont telles que définies dans l'une quelconque des revendications 1 à 6, 10 et 13, la pâte de tortilla à la farine de blé comprenant également une huile végétale liquide.

15. Pâte de tortilla à la farine de blé selon la revendication 14, qui est essentiellement sans ajout (c.-à-d., autre que naturellement présent dans la farine) d'agents anti-agglomérant et sans ajout (c.-à-d., autre que naturellement présent dans la farine) d'antioxydants.

16. Tortilla de farine, dans laquelle la tortilla de farine est une tortilla de farine de blé comprenant une pâte de farine cuite comprenant des particules de gras dispersées dans celle-ci, lesquelles particules de gras sont telles que définies dans l'une quelconque des revendications 1 à 6, 10 et 13, ou dans laquelle la tortilla de farine est une tortilla de farine obtenue par un procédé selon l'une quelconque des revendications 1 à 13.

17. Utilisation de particules de gras selon l'une quelconque des revendications 1 à 6, 10 et 13 pour réduire le caractère collant de la tortilla de farine ou pour réduire l'effet « zipper » d'une tortilla de farine, dans laquelle la tortilla de farine est préparée en préparant une pâte à tortilla comprenant le mélange de farine de céréale, dans laquelle la farine de céréale est de la farine de blé ou une combinaison de farine de blé et d'au moins une autre farine, de l'eau, une huile végétale liquide et les particules de gras ;
le façonnage de la pâte à tortilla en une forme de tortilla ; et
le chauffage de la pâte à tortilla façonnée, obtenant ainsi la tortilla de farine.
